# EUROPEAN PATENT SPECIFICATION

(11) **EP 1 570 314 B1**
(45) Date of publication and mention of the grant of the patent: **23.04.2008**
(21) Application number: 03782016.4
(22) Date of filing: 12.12.2003
(51) Int. Cl.: G03B 15/00

(54) **DEVICE WITH CAMERA MODULES AND FLYING APPARATUS PROVIDED WITH SUCH A DEVICE**
VORRICHTUNG MIT KAMERAMODULEN UND DAMIT AUSGESTATTES FLUGGERÄT
DISPOSITIF POURVU DE MODULES DE CAMERA ET APPAREIL VOLANT EQUIPE DE CE DISPOSITIF

(30) Priority: 13.12.2002 US 318894; 13.02.2003 WO PCT/BE03/00025
(43) Date of publication of application: 07.09.2005
(73) Proprietor: Louis, Pierre, B-5032 Isnes-les-Dames (Gembloux) (BE)
(72) Inventor: Louis, Pierre, B-5032 Isnes-les-Dames (Gembloux) (BE)
(74) Representative: Powis de Tenbossche, Roland
(86) International application number: PCT/BE2003/000218
(87) International publication number: WO 2004/055588

(56) References cited:
- EP-A- 1 178 283
- DE-A- 10 034 601
- US-A- 5 897 223

## Description

### Field of the invention

The invention relates to a device for positioning camera modules, so that a correct overlapping of images taken by the camera modules is ensured, while ensuring also a good definition of the images.

### The prior art

Flying apparatus provided aerial cameras, such as digital mapping camera DMC, are known.

The DMC employs CCD frame or matrix sensors. In a commercial products old by ZI Imaging (A US company), the digital mapping camera comprises eight individual cameral modules. The data collected from the sensors are transferred to an image data processing unit ensuring a forward motion compensation. The DMC is suitable for taking pictures or images at a specific height, function of the objectives and lenses used for the camera modules.

Although the DMC is quite expensive, the DMC is thus not suitable for taking images of the ground at 1000m (view for having level information) and then at 4000m (view for mapping information), i.e. the DMC cannot be modified in function of the requested need.

The present invention has for subject matter a device suitable for orienting the different independent camera modules, so as to enable to use the same camera modules after change of the objectives or lenses for taking images at a high of 1000m at one moment and at another moment at a different height. The adaptation of the digital mapping camera is easy and can be made during the flight.

US-A-3 744 387 discloses a camera said to be suitable for compensating apparent image motion due to the velocity of an aircraft.

The camera comprises a body, a lens housing, a housing receiving a supply spool of film, a housing containing a take-up spool for the film, a drive member whose teeth engages in the openings along the side edges of the film, and a gate assembly.

The gate assembly is first moved in the direction of the line of flight during which time the photograph is taken and then the gate assembly is returned to the right to prepare for taking the next picture.

During the movement of the gate assembly in the direction of line of the flight, movement of the film through the gate is arrested (i.e. there is no relative movement between the film and the gate), while when the gate is returned back, the film is released and is advanced within the gate.

The gate is provided with drive shafts for intermittently advancing the film through the gate assembly, said drive shafts being provided with wheels with teeth engaging the opposite side edges of the film.

The device comprises cams to cause the camera to expose the film at that instant when the film gate is at its midpoint of travel and at maximum velocity.

This document does not disclose the use of a framing sensor, nor its movement by means of a piezo flexure positioner enabling short movement of the framing sensor at substantially constant speed. The device of said document is not suitable for being applied to framing sensor.

### Brief description of the invention

The invention relates to a camera module for taking images from a flying apparatus as defined in claim 1.

The optical glass of the viewing element is for example a protection glass (such as a glass ensuring protection against environment, abrasion, particles, etc.), a glass having characteristics enabling after treatment of the information (received by the frame sensor, possibly pretreated in the electronic part attached to the frame sensor and treated in a computer system) to obtain one or more colour information, preferably several colour information in the multispectral range or partial multispectral range (such as from multispectral camera modules) and/or black/white information in the panchromatic range (such as for panchromatic camera module) and/or infrared information IR in the IR range or partial IR range (such as for IR camera module) and/or a combination of such information. When more than one optical glass is used, the optical glasses can be attached the one to the other, by clipping or screwing for example, so that the information of the image passes through the successive optical glasses. The optical glasses are for example filtering glasses for stopping the IR rays (so as to keep all the visible rays or at least a portion thereof for the sensor) or for stopping all the visible rays (so as to keep all the IR rays or a portion thereof for the sensor).

When using one or more optical glasses, the use of the transparent sheet is optional, i.e. possibly no bottom cover is used.

The framing sensor of the camera module is for example a rectangular or square sensor, said sensor having advantageously more than 20,000,000 pixels, such as between 25,000,000 and 144,000,000 pixels, or even more (framing sensor 4,000x5,000; 4,000x7,000 ; 5,000x10,000 ; 7,000x10,000; 12,000x12,000).

The framing sensor is free of element or layer or film (such as protection film/layer) inducing possible diffraction or disturbance, which could lead to a lack of precision.

By using a framing sensor suitable to collect information in the IR band, in the multispectral band and in the Black/white band, it is possible by using one or more optical glasses to collect by the framing sensor one or more information in the IR band, in the multispectral band and/or in the black/white band. A same framing sensor can thus be used for collecting different information of the image.

The framing sensor can be a CCD sensor, a CMOS sensor or a multilayered sensor with filtering means enabling to collect or analyse at least two colours (selected from the group consisting of red, green and blue) for each pixels, preferably the three major colours (red, blue and green) for each pixel. Such a multilayered sensor is marketed by FOVEON (US) under the trademark SD10.

The camera module is also provided with a heat isolation means, such as an insulation layer, for example an insulation layer covering the lateral side of the second portion of the camera module and possibly the lateral edges of the optical glass or glasses. The first portion of the camera module can also be provided with an insulation layer.

The camera module can also be provided with a heating element, said heating element such as a heating wire or band is for example attached to the rigid carrier, for example on an inner face of the carrier. The heating element is advantageously associated to one control means, such as a thermostat, etc. Heating means are advantageously also used so as to guarantee a minimum temperature for the protection glass(es) and for the shutter.

The framing sensor and/or the system for ensuring a movement of the framing sensor with respect to the second portion of the camera module comprising of the piezo flexure positioner is/are module in a detachable way, so as to enable an easy removal of the framing sensor and/or system, whereby in case of defect of the framing sensor or system, enabling during a flight a quick and easy replacement by another framing sensor possibly mounted on a system for moving it and/or a static framing sensor (replacing the defect framing sensor and system) and/or for replacing the defect system by a new or not defect system.

Advantageously, the framing sensor is associated to a piezo flexure positioner ensuring at least a movement of the sensor at a substantially constant speed for a period of time greater than twice the exposure time, preferably for a period of time greater than 5 times the exposure time, such as for a period comprised between 5 and 100 times the exposure time.

The piezo flexure positioner comprises a plate guided by guiding rails

According to a specific embodiment, the camera module comprises a supporting piece bearing the framing sensor, as well as electronic control means for said framing sensor, said supporting piece having a first edge and a second edge opposite to the first edge. The module comprises two piezo flexure positioners having each a moving part, the moving part of a first piezo flexure positioner being attached to the first edge of the supporting piece, while the moving part of the second piezo flexure positioner is attached to the second edge of the supporting piece.

The camera module is advantageously selected from the group consisting of IR camera module, multi spectral camera module, uni/mono colour camera module, chromatic or panchromatic camera module, and combinations thereof.

The camera module of the invention can be used alone or in combination with one or more camera modules (of the invention or not of the invention, but preferably in accordance to the invention) in a camera, such as in an aerial camera.

The invention relates also to a camera as defined in claim 8.

The invention relates to a device for cameras as defined in claim 9.

By using such a device, it is possible to remove the camera modules (or at least the first portion thereof) from the means for orienting the central optical axis of the camera modules and to use another means for orienting the central optical axis of the camera modules, so as adapt easily the working of the camera modules, for example due to the height of the air plane.

Advantageously, the device comprises at least one means for positioning the means for orienting the central optical axes of the camera modules with respect to the frame. Such a positioning means is advantageously adapted for limiting the possible movement of the means for orienting the camera modules with respect to the frame. The possible movement of said orienting means with respect to the frame is for example less than 1cm, advantageously less than 0.5cm, preferably less than 0.25mm.

Advantageously, the means for orienting the central optical axes of the camera modules is a rigid support provided with at least two passages, each passage being associated to at least one seat element adapted for contacting at least a portion of a camera module.

Preferably, the rigid support is provided with an arm on which an inertial module is attached.

According to an embodiment, the orienting means is a support provided with at least two passages, each passage being associated to at least one seat element adapted for contacting a portion of a camera module, whereby a first seat is adapted for directing the central optical axis of a first camera module in a first direction, while a second seat is adapted for directing the central optical axis of a second camera module in a second direction, whereby the first and second directions are adapted for ensuring an overlapping of a view taken by the first camera module and a view taken by the second camera module.

According to another embodiment, the means for orienting the central optical axis of at least two camera modules comprises at least two distinct elements, a first being suitable for orienting the central optical axis of a first camera module, while a second is suitable for orienting the central optical axis of a second camera module distinct from the first. This enables then to give a specific direction to the central optical axis of the cameras, independently from each other. For example, the framing sensors of the various cameras can be located in a horizontal plane or in a plane forming an angle with respect to said horizontal plane, independently from each other. This can be achieved by means of an interface or slope interface.

According to a detail of an embodiment, the viewing element associated to a camera module is mounted on said camera module in a detachable way, while at least one attachment means is adapted for maintaining the viewing element in position with respect to the camera module.

According to a specific embodiment, the second portion comprising the viewing element is attached to the means for orienting the central optical axes of the camera modules. The means for orienting the camera modules can form a single piece suitable for taking pictures at a specific height and with a specific overlapping of the pictures or images with said camera modules. The replacement of one specific piece by another specific piece enables the use of the same first portion of the camera modules for taking pictures at different height or with different overlapping.

Each camera module is associated to a piezo flexure positioner acting on the framing sensor so as to compensate the relative speed of the air plane with respect to the surface to be photographed.

The camera module is adapted for taking a view in an exposure time of less than 0.1 second. The pixel framing sensor of a camera is mounted movable with respect to the viewing element of the camera module considered, the pixel framing sensor is associated to a piezo flexure positioner ensuring at least a movement of the sensor at a substantially constant speed for a period of time greater than the exposure time, advantageously for a period of time greater than twice the exposure time, preferably for a period of time greater than 5 times the exposure time, for example during a period comprised between 5 and 100 times the exposure time. The exposure time is advantageously lower than 0.01 second, such as 0.005 second, 0.003 second, 0.002 second, 0.001 second, or even less.

Advantageously, the framing sensor with its electronic processing unit is moved with a piezo flexure positioner.

Advantageously, the means for orienting the central optical axis of the camera modules is connected to the frame with interposition of a vibration absorbing means.

According to a specific embodiment, the orienting means is a support provided with at least four passages, each passage being associated to at least one seat element adapted for contacting at least a portion of a camera module, whereby a first seat is adapted for directing the central optical axis of a first camera module in a first direction, a second seat is adapted for directing the central optical axis of a second camera module in a second direction, a third seat is adapted for directing the central optical axis of a third camera module in a third direction and a fourth seat is adapted for directing the central optical axis of a fourth camera module, whereby the first and second directions are adapted for ensuring an overlapping of a view taken by the first camera module and a view taken by the second camera module, while the third and fourth directions are adapted for ensuring an overlapping of a view taken by the third camera module and a view taken by the fourth camera module.

For example, the camera module is selected from the group consisting of IR camera modules, multi spectral camera modules, uni/mono colour camera modules, panchromatic or panchromatic camera modules, and combinations thereof.

According to a specific embodiment, the frame is a receptacle provided with at least two openings, a first opening being adapted for placing the means for directing the central optical axes of the camera modules at least partly in the receptacle, while the second opening is adapted for ensuring the taking of images by the camera modules or a field of view for each camera module. The receptacle is provided with means for supporting the means for directing the central optical axes of the camera modules with interposition of a vibration absorption means.

Preferably, the receptacle is provided with one or more bottom elements with a transparent and anti diffraction sheet, said bottom elements forming with the receptacle and a cover thereof a substantially closed chamber in which the camera modules are located. The device comprises then advantageously a heating element for ensuring a substantially constant temperature in the receptacle.

Advantageously, the receptacle is provided with means for connecting the receptacle to a stabilized suspension.

The invention relates also to flying apparatuses as defined in claims 18, 19.

The invention relates also to a process for taking images as defined in claim 20.

Details and characteristic of the invention will appears from the following description of preferred embodiments of the invention, in which reference is made to the attached drawings.

### Brief description of the drawings

In said drawings,
- figure 1 is a schematic view of an air plane provided with a device of the invention;
- figure 2 is a front view of the air plane of figure 1 ;
- figure 3 is a cross section view of the device used in the air plane of figure 1 ;
- figure 4 is a partial perspective view of the device of figure 3 ;
- figure 5 is a perspective view of the detachable support bearing the independent camera modules;
- figure 6 is an upper view of the support of figure 5 placed on the suspension system with the cover removed;
- figure 7 is a perspective view of the detachable support of figure 5 after removing the camera modules ;
- figure 8 is a cross section view of a camera module ;
- figure 9 is a view showing the movement of the framing sensor of the camera module of figure 8 during the exposure time for a flight;
- figure 10 is an upper view of another camera module;
- figure 11 is a cross section view along the line XI-XI;
- figure 12 is a cross section view of still another camera module ;
- figure 13 is a cross section view along the line XIII-XIII of the camera module of figure 12 ;
- figure 14 represents a graph giving the speed of the plate of the piezo flexure positioner (and therefore of the framing sensor) in function of the time,
- figure 15 is a cross section view of another support for camera modules,
- figure 16 is a perspective view of the detachable support adapted for bearing one single independent camera module;
- figure 17 is an upper view of the support of figure 16 ;
- figure 18 is a lateral view of the detachable support of figure 16 ;
- figure 19 is an upper view of a frame associated to four supports of figure 16 ;
- figure 20 is a cross section view of the frame of figure 19 along the line XX-XX with one support being mounted ;
- figure 21 is a schematic view for explaining a specific use of a camera provided with four independent camera modules ;
- figure 22 is a schematic view of the air plane taking images by means of two framing sensors;

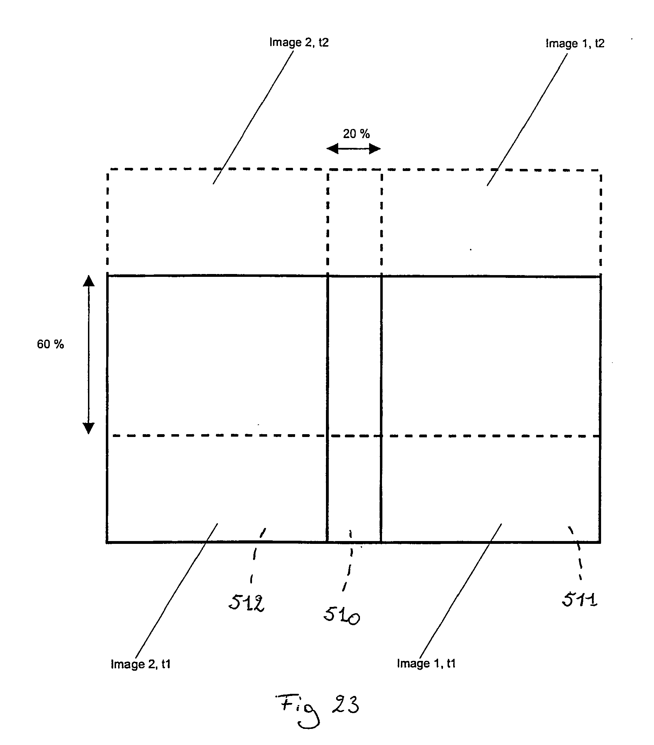

- figure 23 is a schematic view explaining the superposition of the images taken by the air plane of figure 22; and
- figures 24 and 25 are views in cross section of devices similar to that shown in figure 3.

### Description of preferred embodiments

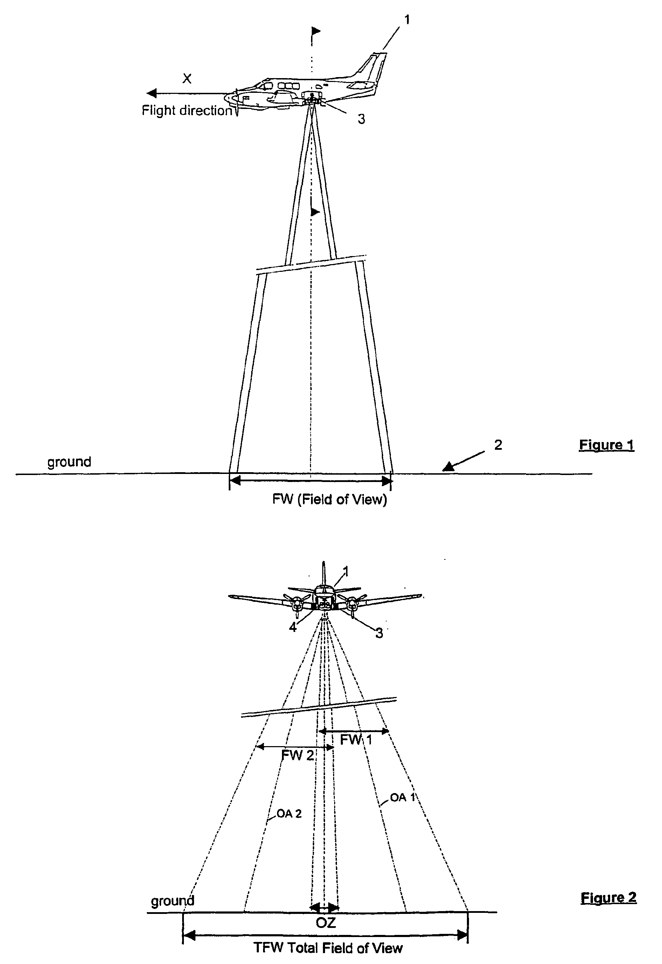

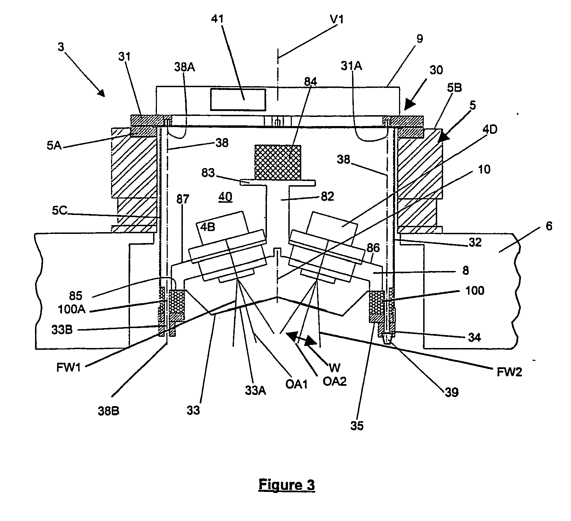

The air plane 1 is provided with a device 3 for taking successive images of the ground 2, when flying according to a flight mission (for example in the flight direction X). The device 3 comprises a series of independent camera modules (for example four camera modules 4 for taking different images along different view axis). Each camera module has a central optical axis OA1,OA2 and have a field of view FW1,FW2 defined by an angle W (see figures 2 and 3).

The device 3 represented in figure 3 is mounted on a stabilized suspension 5 mounted on the bottom 6 of the aircraft 1, said suspension is controlled by motors (not shown) adapted for correcting the position of the device 3 in function of the movement of the air plane, for example due to air turbulence. The suspension 5 comprises a support 5B which can rotate around two substantially horizontal axes H1,H2 and which comprises a rotating ring plate 5A able to rotate around a substantially vertical axis V1.

The suspension 5 has a central open cylindrical chamber 5C suitable for receiving the device 3.

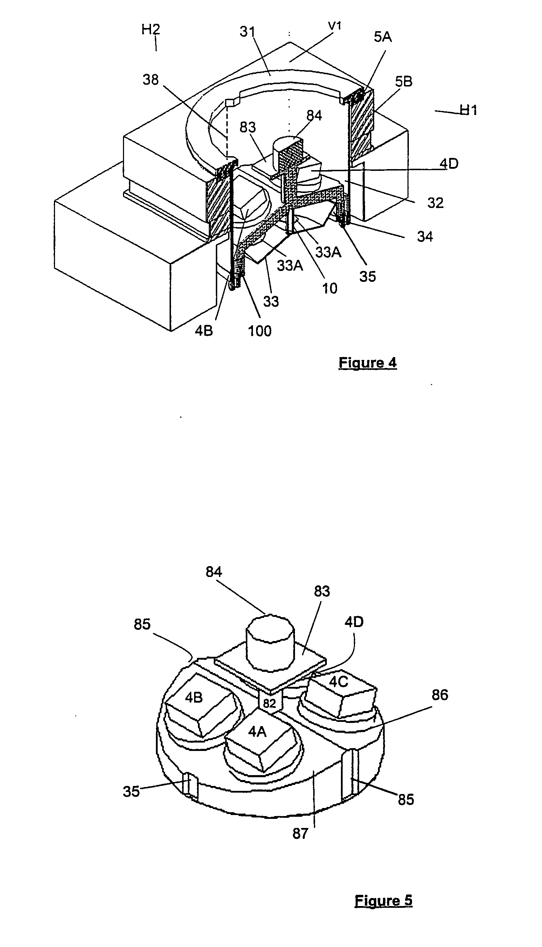

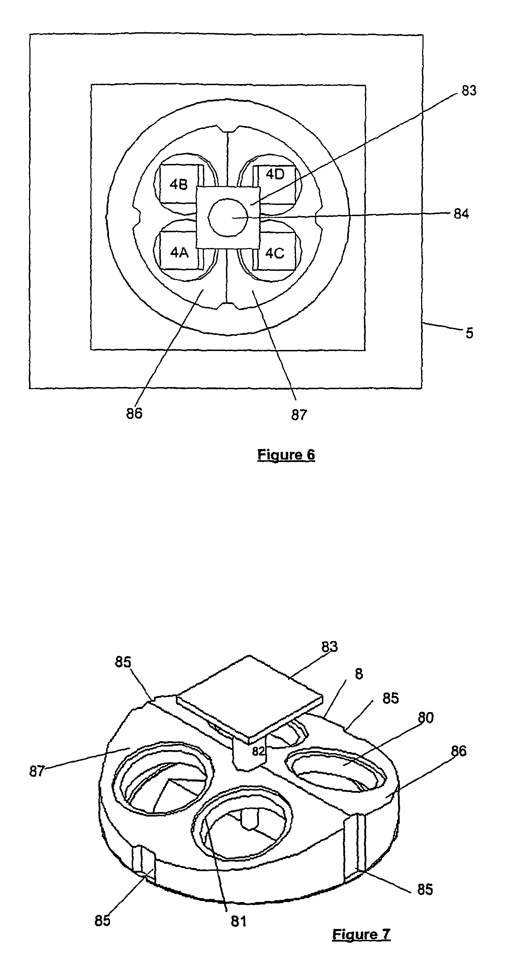

The device 3 comprises :
- a frame 30 formed by an upper ring 31 adapted for resting on the ring plate 5A, a cylindrical wall 32, a lower ring 34, an intermediate ring 35, rods 38 with screwed ends 38A,38B, whereby said rods extend between the lower ring 34 and the upper ring 31, while passing through the lower ring 34 and the intermediate ring 35. Bottom protection covers 33 provided with transparent anti diffraction sheet 33A protect the optical lens of each camera module 4B,4D. The transparent sheet 33A is adapted for the field of view of the camera module. The bottom cover 33 has an edge 33B resting on the anti vibration ring 100 (for example made in foam, such as substantially rigid foam, PUR foam, with closed cells or open cells). The end 38A of a rod 38 is screwed in a recess 31A of the upper ring, while a bolt 39 is screwed on the end 38B. Said frame 30 defines a receptacle with an inner cylindrical chamber 40. The anti vibration ring 100 is placed on the intermediate ring 35, said ring being provided with passages 100A for the rods 38. The transparent sheet 33A is placed so as to be perpendicular to the central optical axis of the camera module. A cover 9 covers the upper passage of the frame or receptacle 30. The inner chamber 40 is provided with a heating means 41 so as to control the temperature of said chamber and so as to ensure that the camera modules 4A,4B,4C,4D located in the chamber 40 are at a same temperature, advantageously at a substantially constant temperature.
- A rigid support element 8 provided with passages 80 having seats 81 for camera modules 4 (see figure 7), said rigid support 8 having an arm 82 bearing a horizontal plate 83 on which is attached an inertial module 84 (see figure 5). The support 8 has along its edge vertical grooves 85 in which the rods 38 extend. The rods cooperate with said grooves 85 so as to limit the movement of the support element 8 with respect to the frame 30. The arm 8 is for example welded to the support element 8. The rigid support 8 has two inclined faces 86,87 so as to orient the optical axis of the camera modules 4B,4D in a first direction OA1, while orienting the camera modules 4C,4D in a second direction OA2. Due to said orientation, the field of view FW2 overlaps the field of view FW1, said overlapping zone OZ (see figure 2) corresponding for example to at least 10% (preferably more than 20%, such as for example from 20 to 75%, such as 25%, 40%, 50%) of the total field of view TFW. The bottom covers 33 are attached to the support 8 by a central leg 10.

The camera modules 4A,4B,4C,4D are fixed on the support 8 by screwing or by a clipping mechanism.

When flying, it is possible to remove the cover 9 so as to remove the support 8 out of the chamber 40. The camera modules can be removed from the support 8. The system enables thus the use of another support 8 with the same camera modules, for example for having a different overlapping of the fields of view or to use different lenses for the camera modules with a different support for taking images at a different height.

Each camera module comprises :
- a first portion 50 with a framing sensor 51(such as a CCD or a CMOS or a multilayered sensor with filtering means enabling to collect or analyse at least two colours [selected from the group consisting of red, green and blue] for each pixels, preferably the three major colours [red, blue and green] for each pixel. Such a multilayered sensor is marketed by FOVEON (US) under the trademark SD10.) mounted on a plate 52 of a flexure piezo positioner 53, said positioner 53 being controlled so as to enable a movement of less than 100µm of the plate within a time of a few milliseconds, such as within a period of 10 to 20 milliseconds, the movement of the plate 52 being guided by rails 59,
- a second portion 54 provided with the lenses 55 and a shutter 56 (the working of the shutter is controlled so as to expose the framing sensor to light at a specific time and during a specific period of time,for example in function of the position of the air plane, advantageously, the shutter is provided or associated to means for controlling the size and speed of opening of the diaphragm), and
- means 57 for attaching the first portion 50 with the second portion 54.

The first portion 50 of the camera module comprises a rigid carrier 72 on which is mounted the flexure piezo positioner 53 bearing the framing sensor 51. Advantageously the flexure positioner 53 is mounted and maintained in position by means (such as screws, clips, etc.) enabling an easy removal of the piezo positioner 53 with the frame sensor. In this way, in case a problem arises to the framing sensor or to the flexure piezo positioner, it is possible during the flight to replace the possibly defect piezo positioner with framing sensor by another piezo positioner with framing sensor or by a simple framing sensor.

The second portion 54 of the camera module is also provided with one or more optical glasses 55bis adapted for the passage of specific waves (electromagnetic waves) suitable, after being collected by the image framing sensor and converted in digital form in the electronic system 58, to be treated in the computer so as to give a very precise image.

The optical glass or glasses can be for example a protection glass (such as a glass ensuring protection against environment, abrasion, particles, etc.), a glass having characteristics enabling after treatment of the information (received by the frame sensor, possibly pretreated in the electronic part attached to the frame sensor and treated in a computer system) to obtain one or more colour information, preferably several colour information in the multispectral wave length range or partial multispectral wave length range (such as from multispectral camera modules) and/or black/white information in the panchromatic band range (such as for panchromatic camera module) and/or infrared information IR in the IR wave length range or partial IR wave length range (such as for IR camera module) and/or a combination of such information. The glass or glasses are advantageously blocking the IR rays or the visible rays.

When using one or more optical glasses, the use of the transparent sheet 33A is optional, i.e. possibly no bottom cover 33 is used.

The framing sensor is free of element or layer or film (such as protection film/layer) inducing possible diffraction or disturbance, which could lead to a lack of precision.

By using a framing sensor suitable to collect information in the IR band, in the multispectral band and in the Black/white band, it is possible by using one or more optical glasses to collect by the framing sensor one or more information in the IR band, in the multispectral band and/or in the black/white band. A same framing sensor can thus be used for collecting different information of the image.

The camera module is also provided with a heat isolation means, such as an insulation layer, for example an insulation layer 40A covering the lateral side of the second portion 54 of the camera module and possibly the lateral edges of the optical glass or glasses 55 bis. The first portion 50 of the camera module can also be provided with an insulation layer 40B.

The camera module can also be provided with a heating element 41, said heating element 41 such as a heating wire or band is for example attached to the rigid carrier 72, for example on an inner face of the carrier 72. The heating element 41 is controlled by a control system 41bis (such as a thermostat), so as to maintain the temperature in the inner chamber of the camera module (environment in contact with the framing sensor) with a specific range of temperature (such as between 5 and 30°C) and/or so as to maintain substantially constant said temperature (temperature of about 20°C).

Advantageously the heat insulation cover 40A is associated to one or more heating elements 41 (with control system or thermostat 41bis), so as to ensure a minimum temperature for the glasses 55, as well for the shutter 56.

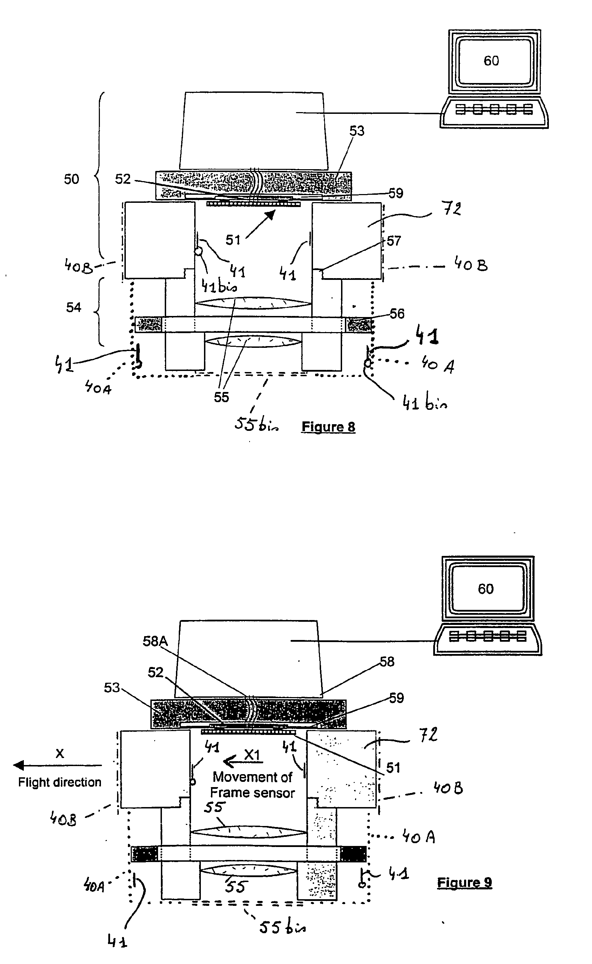

In the embodiment of figure 8, the electronic part 58 of the sensor is not fixed on the plate 52, but is connected via wires 58A to the sensor 51. The movement of the plate is made in a direction parallel to the flight direction X of the air plane. The movement of said plate is controlled by a system 60 receiving information from the air plane (such as speed) so as to compensate the movement of the air plane with respect to the ground to be photographed during the exposure time of the sensor. The movement (X1) of the plate 52 and thus of the framing sensor 51 is parallel to the movement of the air plane (X) during the exposure time so as to compensate the movement of the air plane during the exposure time.

Figure 9 shows the end movement of the plate 52, before its return in the initial position.

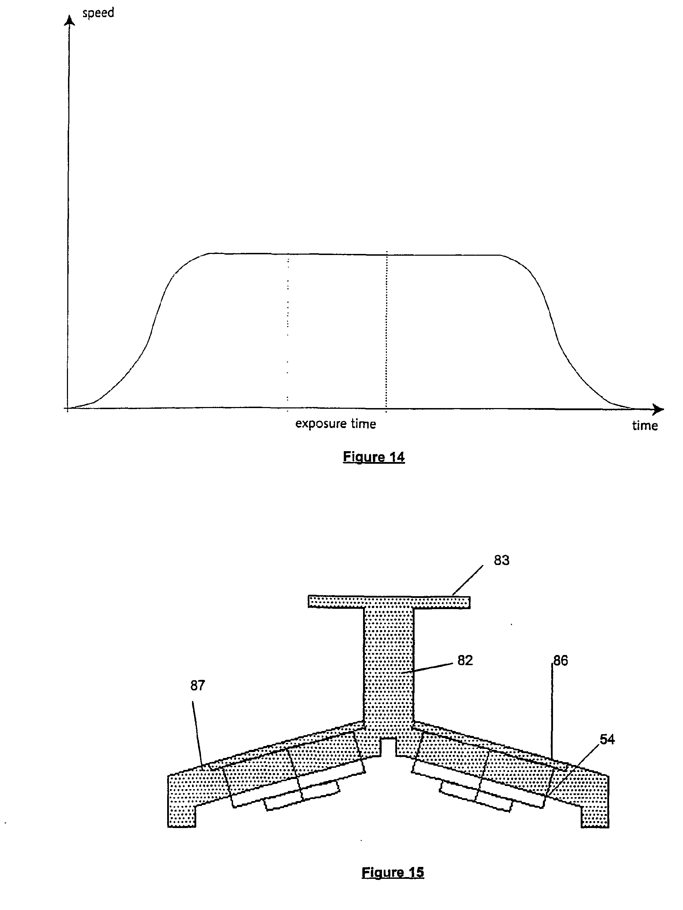

The movement speed of the plate increases first progressively to a constant speed. Said constant speed is then maintained during a time period of a few milliseconds, such as 10 milliseconds or 20 milliseconds. The variation of speed of the plate 52 is represented in figure 14. The shutter 56 is controlled so that the exposure time (for example 1/500 second or 1/1000 second) is made during a movement of the plate 52 (i.e. of the sensor) at a constant speed.

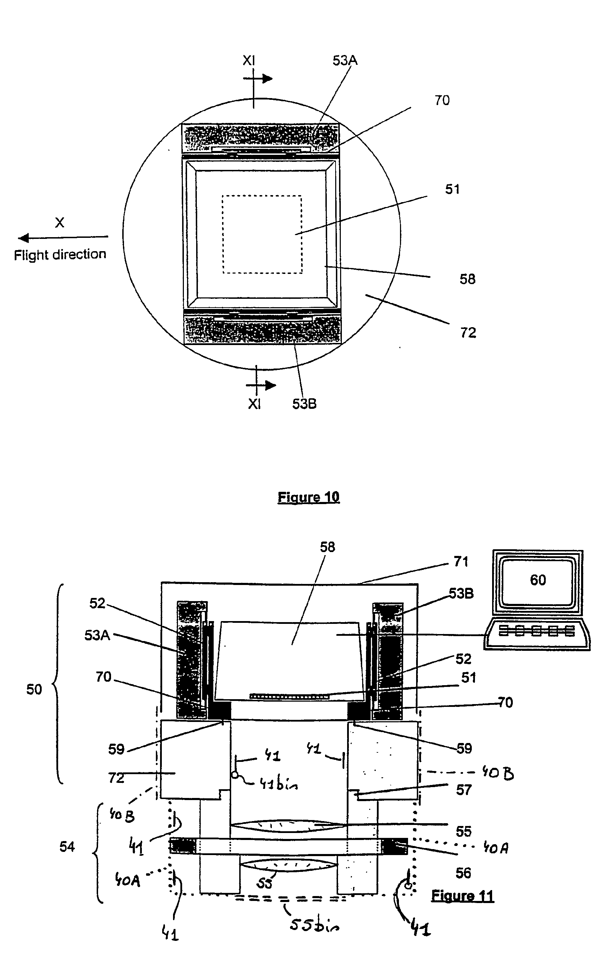

Figures 10 and 11 show another camera module similar to the camera module of figure 8, except that the electronic system 58 is attached to a supporting piece 70 having two opposite edges 70A,70B. The opposites edges 70A are respectively attached to a left flexure piezo positioner 53A and to a right flexure piezo positioner 53B. The movement of the supporting piece 70 is guided by two parallel rails 59. The framing sensor 51 is directly connected to its electronic part 58. A cover 71 is attached to a rigid carrier 72 so as to form a protection for the flexure piezo positioners and the electronic part. In figure 10, the protective cover 71 was removed.

The camera module of figures 10 and 11 is also provided with optical glasses 55bis, insulation layers 40A,40B, and heating elements 41 with control means 41bis.

According to another embodiment (not shown) similar to the embodiment of figures 10 and 11, the electronic system is attached to a supporting piece, which is connected to one single flexure piezo positioner for controlling the movement of the framing sensor.

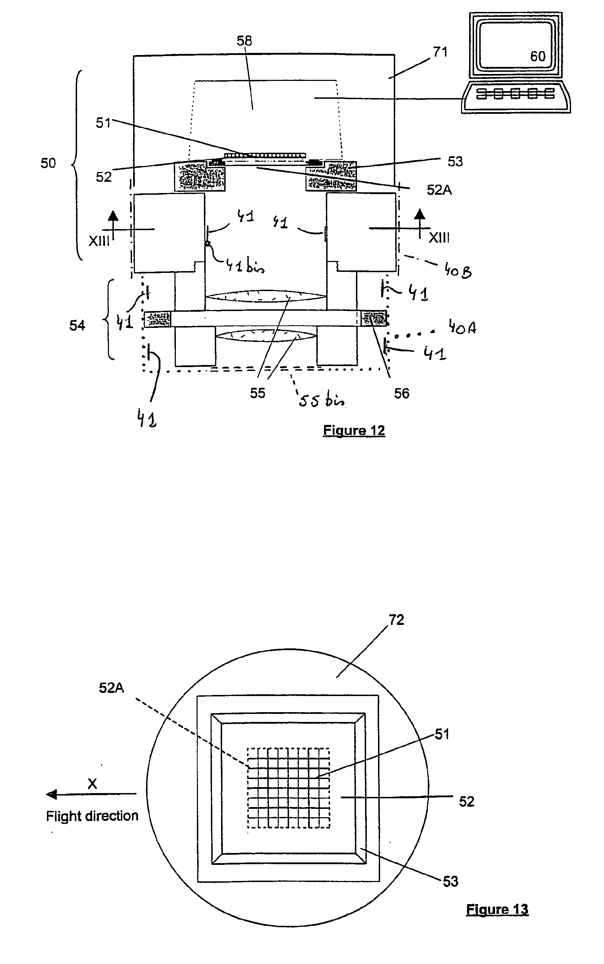

Figures 12 and 13 show still another camera module similar to the camera module of figure 8. In this embodiment, the plate 52 of the flexure piezo positioner 53 has a central opening 52A. The framing sensor 51 is placed above said opening, while the electronic part 58 is directly attached to the plate 52. The framing sensor 51 is directly connected to its electronic part 58. According to another embodiment, the framing sensor is placed at least partly in said opening 52A, while still according to another possible embodiment, a part of the electronic part 58 extends through the opening 52A, while the framing sensor is located below the plate 52 towards the glasses 55. A cover 71 (attached to the rigid support 72) can be used for protecting the electronic part 58 of the framing sensor 51.

The camera module of figures 12 and 13 is also provided with optical glasses 55bis, insulation layers 40A,40B, and heating elements 41.

According to still another possible embodiment, the plate (52) of the piezo positioner 53 bears on one of its faces a box for receiving the electronic part 58 on which is attached the framing sensor.

Figure 15 is a view of another support 8 which is provided with the portion 54 (comprising the lenses and the shutter). The portion of the camera module 50 with the framing sensor is mounted detachable with respect to the support 8. When having to take views at a different height, during a flight, it is possible to remove the support 8 with the camera modules 4 out of the receptacle 3, to remove the first portions 50 of the camera modules, to place said first portions 50 on another support 8 provided with portions 54 with different lenses, and then to place the support 8 with the camera modules in the receptacle 3. The first portion of the camera modules can for example be clipped on the fixation means 57. The support 8 can be provided with bottom protection covers for the lenses, said protection covers being provided with detachable glasses or with fixed glasses.

In the embodiment of figures 3 and 4, a support provided with bottom protection covers 33 and with detachable glasses 33A is shown. The glasses 33A are mounted detachably on the bottom protection covers 33 so as to close openings. The glasses 33A can be maintained in position by various mechanisms, such as clips, screws, etc. After removing the support 8 from the receptacle, it is possible to remove the glasses 33A from the bottom protection covers 33 of the removed support 8 and to place said glasses on the bottom protection covers of another support 8. When the camera modules are provided with one or more outer optical glasses 55bis, no bottom protection covers can be used, as one optical glass acts as protection for the camera module.

When using a support 8 with four camera modules 4 (see figure 5), the camera modules 4A and 4C take views of the ground at a time "T1", while the camera modules take views at a time "T2" different from time "T1", whereby enabling a transfer of data of the camera modules to a data treatment system during the taking of images by the camera modules 4B and 4D.

The camera modules represented as example in figures 8 to 11 can be used in camera comprising only one camera module. The piezo flexure positioner can also be used in improving existing cameras by moving in a very precise way the framing sensor during the exposure time or at least during a portion of said exposure time.

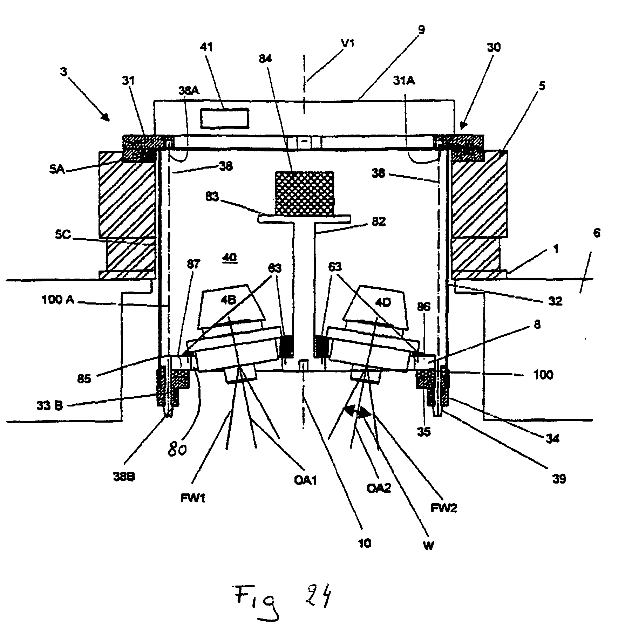

Figure 24 is a figure similar to figure 3, except that the rigid support 8 has a horizontal face provided with openings 80 adapted for working with ring seats 63, which are profiled so as to give the inclination for the camera modules. The ring seats 63 can easily be replaced so as to adapt the inclination of the bearing surface of the seat (and thus of the optical axis of the camera module), for example an angle of 5°, 7.5°, 10°, 12.5°, 15°; 20°, etc.

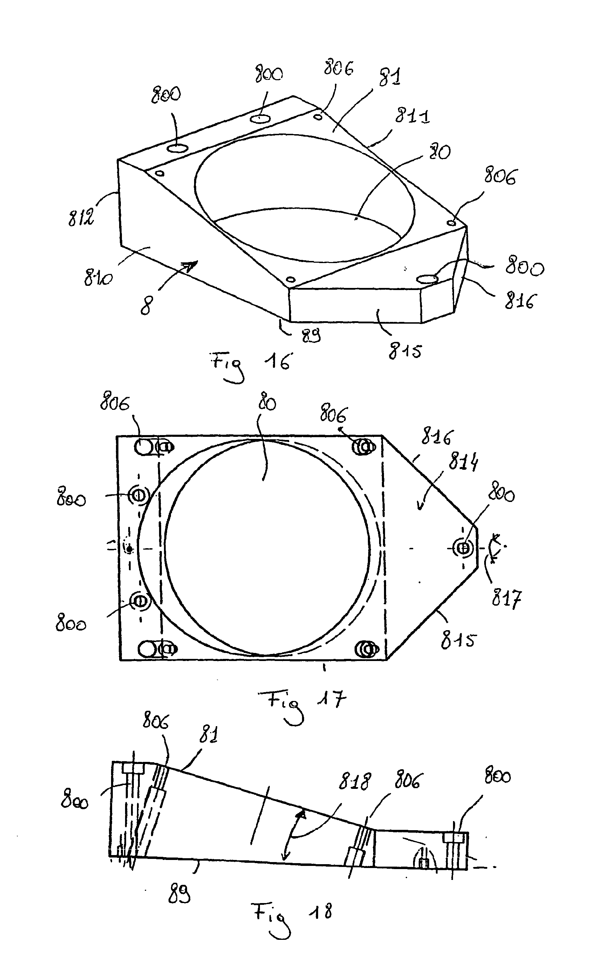

Figure 16 is a view of a rigid support element or slope interface 8 for providing a specific direction to the central optical direction for a camera module mounted on said rigid support.

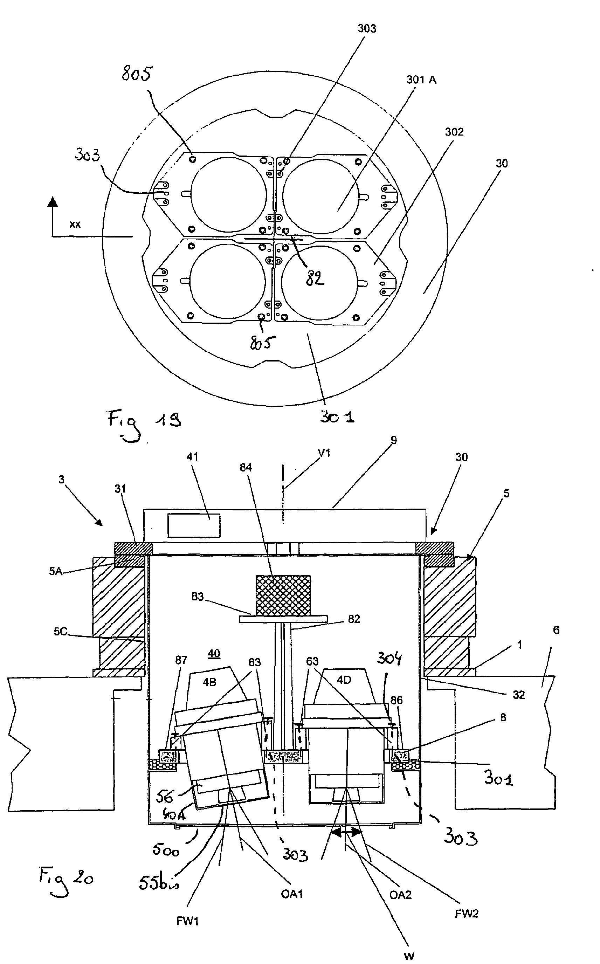

When the device comprises several camera modules, it is possible by using support element of the type of figure 16 to adapt the optical direction for each camera module. For example, the support elements are placed adjacent to each other in the frame 30. The frame 30 is shown in figures 19 and 20.

The support element 8 is provided with a passage 80 having a seat 81 formed by the upper surface of the element 8, said upper face being inclined with respect to the bottom face 89. For the correct placement of the support element 8 in the frame 30, said frame 30 (for example made at least partly of composite materials) is provided at its bottom 300 with a plate 301 with four view openings 301A. The plate 301 bears screwing rods 303 adapted for guiding the placement and the position of the support elements 8. The supporting element 8 is provided with three holes 800 for enabling the passage of three screwing rods 303, whereby a fixation of the support can be achieved by bolts 304.

The fixation of the camera module 4 is achieved by screws 805, the end of which is screwed in the holes 806 of the support element 8.

The support element 8 has two parallel lateral edges 810,811, a transversal edge 812, and a protruding part 814 with lateral edges 815,816 forming an angle 817 therebetween.

When the four support elements 8 are placed on the plate 301, the lateral faces of support elements or slope interfaces 8 do not contact each other.

By having different support elements 8 with different angles 818 between the upper face 81 and the bottom face 89 (i.e. different slope interfaces with different slopes), it is possible to adapt the direction of the optical axis for each camera module, independently from each other. The support elements or slope interfaces 8 are also easily produced and of higher quality tolerance. Indeed when using a support element 8 intended to bear several camera modules, an error made only for a portion of the element used for the placement of one camera module will render the complete support element unsuitable.

Possibly the placement of the support element 8 on the plate 301 can be operated after mounting the camera module on the support element or slope interface 8.

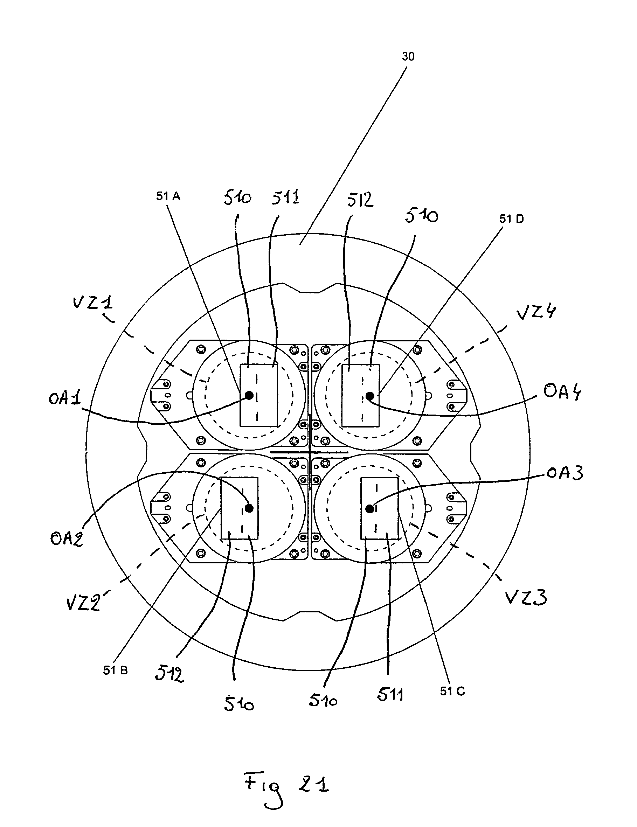

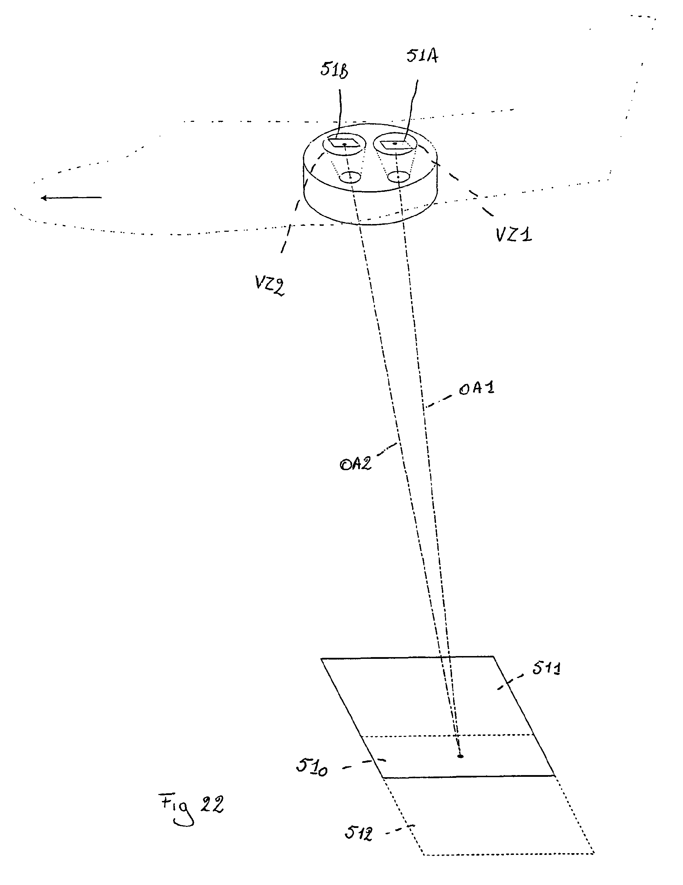

Figure 21 shows schematically the four framing sensors 51A,51B,51C,51D of four camera modules 4 placed in a frame 30. Each framing sensor is associated to a set of glasses and to a shutter, said glasses defining a circular viewing image or zone VZ1,VZ2,VZ3, VZ4 with respective optical axis OA1,OA2,OA3,OA4. Each framing sensor 51A,51B,51C,51D is not centred with respect to the optical axis, but is placed in a zone of the viewing image for which the distorsion and modulation of the image is acceptable. Each framing sensor is adapted so as to take a view of the image along the optical axis through optical lenses or glasses 55 (see also figure 22).

The images taken by the framing sensors 51A and 51B comprised a zone 510 comprising the optical axis of the glasses (OA1, OA2), and a side zone (511,512) located on the left or the right of the zone 510. The merging of the images taken by the sensors 51A,51B is carried out so as to form an image comprising the zones 510,511,512. The fact that the sensors 51A,51B take images with a portion including the optical axis view enables a quicker merging of the images.

By making an overlapping of the images taken successively, it is then possible to form a band of successive images. The overlapping of two successive images is for example comprised between 25 and 85%, such as about 50 - 60%, whereby enabling a very good merging of two successive images taken at different times (tl, t2).

When using sensors 51A,51B,51C and 51D with a vertical optical axis, it is easily possible to determine the matching of the picture in the central zone comprising the optical axis. In this case, the sensors 51A,51B,51C,51D will take images with the optical axis in a corner portion of the sensor, it is possible to combine together the four images by merging the portions with the optical axis of said images taken by the four sensors.

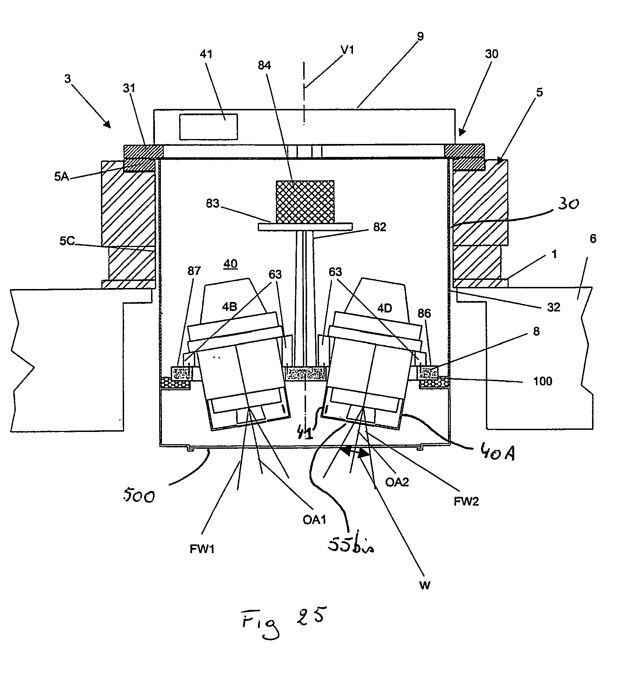

Figure 25 is a view of a device similar to the device shown in figure 24. An insulation envelope 40A with a protection glass 55bis is used for protecting the shutter and the glasses, said insulation envelope 40A being provided with a heating system 41.

The frame 30 is made of composite material with insulation properties. The bottom of the frame 30 is provided with a removable protection plate 500, said plate closing the frame 30 during a takeoff and landing of the air plane so as to provide a full protection of the camera modules. The plate 500 is removed when images have to be taken, i.e. when the air plane is at the right altitude. The removal of the plate can be made by a motorized device.

The device is also provided with a system for controlling or adapting the focal distance of the glasses or lenses to the infinity (i.e. for focusing on the infinity). Said adapting step is made by rotating the lenses and shutter with respect to the frame associated with the framing sensor, so as to modify the distance between the framing sensor and the glasses and lenses. When the correct focussing on the infinity is achieved, screws or bolts are used so as to maintain into position the piece with the shutter with respect to a piece associated to the framing sensor.

## Claims

1. A camera module (4) for taking images from a flying apparatus (1) moving in a flying direction (X), said camera module (4) comprising a first portion (50) with at least a pixel framing sensor (51) and a second portion (54) comprising at least a viewing element selected in the group consisting of objectives, lenses (55), optical glasses and combinations thereof, whereby the camera module (4) has a central optical axis (OA1,OA2), said pixel framing sensor (51) being provided with means (58) for transferring data collected by the pixel framing sensor (51) to an element selected from the group consisting of data memory, data treatment system and combinations thereof, and at least one element for ensuring a forward motion compensation, whereby the camera module (4) is adapted for taking a view in an exposure time of less than 0.1 second, the pixel framing sensor (51) of the camera module (4) is mounted movable with respect to the second portion (54), the pixel framing sensor (51) is free of element or layer or film inducing diffraction or disturbance, and the pixel framing sensor (51) is associated to a piezo flexure positioner (53) ensuring at least a movement of the sensor (51) at a substantially constant speed for a period of time greater than the exposure time, said piezo flexure positioner (53) being adapted to act as compensation means of the forward motion of the flying apparatus for the pixel framing sensor (51) of the camera module.

2. The module of claim 1, **characterized in that** the piezo flexure positioner (53) ensures a movement of the sensor (51) of less than 100µm at a substantially constant speed for a period of time greater than the exposure time, said piezo flexure positioner (53) being adapted to act as compensation means of the forward motion of the flying apparatus for the pixel framing sensor (51) of the camera module.

3. The module of claim 1 or 2, in which the pixel framing sensor (51) is associated to a piezo flexure positioner (53) ensuring at least a movement of the sensor at a substantially constant speed for a period of time greater than twice the exposure time, advantageously comprised between 5 and 100 times the exposure time, said piezo flexure positioner (53) being adapted to act as compensation means of the forward motion of the flying apparatus for the framing sensor (51) of the camera module.

4. The module of any one of the claims 1 to 3, in which the piezo flexure positioner acting as compensation means of the forward motion of the flying apparatus for the pixel framing sensor (51) of the camera module comprises a plate (52) guided by guiding rails (59).

5. The module of any one of the claims 1 to 4, which is selected from the group consisting of IR camera modules, multi spectral camera modules, mono colour camera modules, panchromatic camera modules, and combinations thereof.

6. The module of any one of the claims 1 to 5, which comprises a supporting piece (70) bearing the pixel framing sensor (51), as well as electronic control means (58) for said pixel framing sensor (51), said supporting piece (70) having a first edge (70A) and a second edge (70B) opposite to the first edge (70A), whereby the module (4) comprises two piezo flexure positioners (53A,53B) having each a moving part, the moving part of a first piezo flexure positioner (53A) being attached to the first edge of the supporting piece (70), while the moving part of the second piezo flexure positioner (53B) is attached to the second edge of the supporting piece (70).

7. The module of any one of the claims 1 to 6, in which the piezo flexure positioner (53) comprises a movable plate (52), whereby the pixel framing sensor (51) is associated to an electronic part (58) which is attached to the plate (52) and whereby the movable plate (52A) has an opening for the pixel framing sensor (51) so as to enable the pixel framing sensor (51) to take images.

8. A camera comprising at least a camera module according to any one of the claims 1 to 7.

9. Device (3) for cameras (4) for taking images of an object or surface, said device (3) being adapted to be mounted on a stabilized suspension system (5) to be mounted on an movable vehicle (1) moving at a relative speed higher than 100km/hour with respect to the object or surface to be taken in images, said device comprising :
- a frame (30),
- at least two camera modules (4A,4B,4C,4D) according to any one of the claims 1 to 7 for taking a first series of views by the first camera module (4A) and a second series of views by the second camera module (4B), each camera module (4A,4B) comprising a first camera portion (50) comprising a pixel framing sensor (51) and a second camera portion (54) comprising at least a viewing element selected in the group consisting of objectives, lenses (55), optical glasses and combinations thereof, whereby each camera module (4A,4B) has a central optical axis (OA1, OA2), said pixel framing sensor (51) being provided with means (58) for transferring data collected by the sensor (51) to an element selected from the group consisting of data memory, data treatment system and combinations thereof, and
- a means (8) adapted for orienting the central optical axis (OA1,OA2) of each camera module (4A,4B) with respect to the frame (30),
in which the means (8) for orienting the central optical axis of each camera module (4A,4B) is adapted for orienting at least the central optical axis (OA1) of a first camera module (4A) with respect to the central optical axis (OA2) of a second camera module (4B), preferably for orienting at least the central optical axis (OA1) of a first camera module (4A) and the central optical axis (OA2) of a second camera module (4B), so that the first camera module (4A) and the second camera module (4B) have overlapping field of views (FW1,FW2), whereby said orienting means (8) is mounted detachable with respect to the frame (30), while at least the first portion (50) of the camera module(s) (4A,4B) is mounted detachable with respect to said orienting means (8).

10. The device of claim 9, in which the means (8) for orienting the central optical axes (OA1,OA2) of the camera modules (4A,4B) is a rigid support (8) provided with at least two passages (80), each passage being associated to at least one seat element (81) adapted for contacting at least a portion of a camera module (4A,4B), the rigid support (8) being advantageously provided with an arm (82) bearing an inertial module (84).

11. The device of claim 9 or 10, in which the orienting means (8) is a support provided with at least two passages (80), each passage (80) being associated to at least one seat element (81) adapted for contacting a portion of a camera module (4A,4B), whereby a first seat (81) is adapted for directing the central optical axis (OA1) of a first camera module (4A) in a first direction, while a second seat (81) is adapted for directing the central optical axis (OA2) of a second camera module (4B) in a second direction, whereby the first and second directions (OA1,OA2) are adapted for ensuring an overlapping (OZ) of the field of view (FW1) of the first camera module (4A) and the field of view (FW2) of the second camera module (4B).

12. The device of any one of the claims 9 to 11, in which the second portion (54) of a camera module (4A) is mounted on the first portion (50) of said camera module (4A) in a detachable way and in which at least one attachment means (57) is adapted for maintaining the second portion (54) in position with respect to the first portion (50) of the camera module (4).

13. The device of any one of the claims 9 to 11, in which the second portion (54) of the camera module (4) is attached to the means (8) for orienting the central optical axes (OA1,OA2) of the camera modules (4A,4B).

14. The device of any one of the claims 9 to 13, in which the means (8) for orienting the central optical axes (OA1,OA2) of the camera modules (4A,4B) is connected to the frame (30) with interposition of a vibration absorbing means (100).

15. The device of any one of the claims 9 to 14, in which the orienting means (8) is a support provided with at least four passages (80), each passage (80) being associated to at least one seat element (81) adapted for receiving a portion of a camera module (4A,4B), whereby a first seat (81) is adapted for directing the central optical axis (OA1) of a first camera module (4A) in a first direction, a second seat (81) is adapted for directing the central optical axis (OA2) of a second camera module (4B) in a second direction, a third seat (81) is adapted for directing the central optical axis (OA3) of a third camera module (4C) in a third direction and a fourth seat (81) is adapted for directing the central optical axis (OA4) of a fourth camera module (4D), whereby the first and second directions (OA1,OA2) are adapted for ensuring an overlapping (OZ) of the field of view (FW1) of the first camera module (4A) and the field of view (FW2) of the second camera module (4B), while the third and fourth directions are adapted for ensuring an overlapping of the field of view of the third camera module and the field of view of the fourth camera module.

16. The device of any one of the claims 9 to 15, in which the frame is a receptacle (30) provided with at least two passages, a first passage being adapted for placing the means (8) for directing the central optical axis (OA1,OA2) of the camera modules (4A,4B) at least partly in the receptacle (30), while the second passage is adapted for ensuring the fields of view (FW 1,FW2) of the camera modules, and in which the receptacle (30) is provided with means (35) for supporting the means (8) for directing the central optical axes (OA1,OA2) of the camera modules (4A,4B) with interposition of a vibration absorption means (100), the receptacle (30) being advantageously provided with means for connecting the receptacle on a stabilized suspension (5), preferably the receptacle (30) being provided with a cover (9) and a bottom element (33) with transparent sheets (33A) for defining a substantially closed chamber for the camera modules (4A,4B), while the device further comprises a heating element (41) for ensuring a substantially constant temperature in the receptacle (30).

17. The device of claim 9, in which the means for orienting the central optical axis (OA1,OA2) of at least two camera modules (4A,4B) comprises at least two distinct elements (8), a first (8) being suitable for orienting the central axis (OA1) of a first camera module (4A), while a second (8) is suitable for orienting the central axis (OA2) of a second camera module (4B) distinct from the first (4A).

18. A flying apparatus provided with at least one camera according to claim 8.

19. A flying apparatus provided with cameras (4A,4B) for taking images of an object or surface, said flying apparatus (1) comprising a stabilized suspension (5) on which a device (3) according to any one of the claims 9 to 17 with distinct camera modules (4A,4B) is mounted.

20. A process for taking images of an object or surface during a flight of a flying apparatus (1) in a direction, said flying apparatus being provided with cameras (4A,4B), whereby said flying apparatus (1) comprises a stabilized suspension (5) on which a device (3) with at least one camera module (4A) is mounted, whereby at least one camera module (4A) comprises a first portion (50) with a pixel framing sensor (51) and a second portion (54) with at least a viewing element selected in the group consisting of objectives, lenses (55), optical glasses and combinations thereof, whereby the camera module (4A) has a central optical axis (OA1), said pixel framing sensor (51) being provided with means (58) for transferring data collected by the sensor to an element (60) selected from the group consisting of data memory, data treatment system and combinations thereof, whereby the camera module (4A) is adapted for taking a view in a exposure time of less than 0.1 second, in which the pixel framing sensor (51) of the camera module is mounted movable with respect to the second portion (54), said camera module being a camera module according to anyone of the claims 1 to 7, comprising the step of: moving the pixel framing sensor by a piezo flexure positioner (53), advantageously on less than 100 µm, at a substantially constant controlled speed for a period of time greater than the exposure time so as to ensure a forward motion compensation of the images taken during the flight.

## Patentansprüche

1. Ein Kameramodul (4) für das Nehmen von Bildern von einem Flugkörper (1), der sich in eine Flugrichtung (X) bewegt; das Kameramodul (4) enthält einen ersten Teil (50) mit mindestens einem Pixel framing Sensor (51) und einen zweiten Teil (54) der mindestens ein Betrachtungselement vorgewählt in der aus Objektiven, Linsen (55), optischen Gläsern und Kombinationen davon bestehenden Gruppe. Das Kameramodul (4) hat eine zentrale optische Mittellinie (OA1, OA2). Der Pixel framing Sensor (51) wird mit Mitteln (58) für die Übertragung von durch den Pixel framing Sensor (51) versammelt Daten, zu einem Element vorgewählt aus der Gruppe die aus Datengedächtnis, Datenbehandlungssystem und eine Kombination davon besteht, und mindestens ein Element für die Sicherstellung eines Ausgleiches des Bewegungssystems ausgestattet. Das Kameramodul (4) wird für das Nehmen einer Ansicht in eine Belichtung Zeit von weniger als 0.1 Sekunde angepasst, der Pixel framing Sensor (51) des Kameramoduls (4) wird beweglich in Bezug auf den zweiten Teil (54) angebracht, der Pixel framing Sensor (51) ist frei vom Element oder Schicht oder Film, die Brechung oder Störung verursachen, und der Pixel framing Sensor (51) wird zu einem piezo Positionierstelltisch (53) verbunden, das mindestens eine Bewegung des Sensors (51) mit einer wesentlichen konstanten Geschwindigkeit während eines Zeitabschnitts grösser als die Belichtung Zeit sicherstellt, das besagte piezo Positionierstelltisch (53), das als Ausgleich Mittel der Vorwärtsbewegung des Flugkörpers für den Pixel framing Sensor (51) des Kameramoduls angepasst wird.

2. Das Modul von Anspruch 1, gekennzeichnet in dem das piezo Positionierstelltisch (53) stellt eine Bewegung des Sensors (51) von weniger als 100µm mit einer im wesentlichen konstanten Geschwindigkeit während eines Zeitabschnitts grösser als die Belichtung Zeit. Das besagte piezo Positionierstelltisch (53) wird angepasst, um als Ausgleichsmittel der Vorwärtsbewegung des Flugkörpers für den Pixel framing Sensor (51) des Kameramoduls zu wirken.

3. Das Modul von Anspruch 1 oder 2, in denen der Pixel framing Sensor (51) zu einem piezo Positionierstelltisch (53) verbunden ist, die mindestens einer Bewegung des Sensors mit einer im wesentlichen konstanten Geschwindigkeit während eines Zeitabschnitts größer als zweimal die Belichtung Zeit sicherstellt, enthielt vorteilhaft zwischen 5 und 100 mal die Belichtung Zeit. Das piezo Positionierstelltisch (53) wird angepasst, um als Ausgleichsmittel der Vorwärtsbewegung des Flugkörpers für den framing Sensor (51) des Kameramoduls zu wirken.

4. Das Modul von irgendeinem der Ansprüche 1 bis 3, in denen das piezo Positionierstelltisch, das als Ausgleichsmittel der Vorwärtsbewegung des Flugkörpers für den Pixel framing Sensor (51) des Kameramoduls dient, eine Platte enthält (52), die durch Führungsleisten (59) geführt wird.

5. Das Modul von irgendeinem der Ansprüche 1 bis 4, der von der Gruppe vorgewählt wird, die aus IR Kameramodulen, multispektralen Kameramodulen, Monofarbigkameramodulen, panchromatic Kameramodulen und Kombinationen davon besteht.

6. Das Modul von irgendeinem der Ansprüche 1 bis 5, der ein stützendes Stück enthält (70), das den Pixel framing Sensor (51) trägt, sowie elektronische Kontrolle Mittels (58) für den besagten Pixel framing Sensor (51), das besagte stützende Stück (70), das einen ersten Rand (70A) hat und einen zweiten Rand (70B) gegenüber dem ersten Rand (70A), dadurch das Modul (4) zwei piezo Positionierstelltische (53A, 53b) enthält, die jede einen beweglichen Teil haben, der bewegliche Teil eines ersten piezo Positionierstelltisches (53A), das zum ersten Rand des stützenden Stückes (70) angebracht wird, während der bewegliche Teil das zweite piezo Positionierstelltisch (53B) zum zweiten Rand des stützenden Stückes (70) angebracht wird.

7. Das Modul von irgendeinem der Ansprüche 1 bis 6, in denen das piezo Positionierstelltisch (53) eine bewegliche Stahlplatte (52) enthält, mit der, der Pixel framing Sensor (51) zu einem elektronischen Teil (58) verknüpft ist, das zur Platte (52) angebracht wird und die bewegliche Platte (52A) hat eine Öffnung für den Pixel framing Sensor (51), so dass der Pixel framing Sensor (51) ermöglicht wird, Bilder zu nehmen.

8. Eine Kamera, die nach irgendeinem der Ansprüche 1 bis 7 mindestens ein Kameramodul enthält.

9. Vorrichtung (3) für Kameras (4) für das Nehmen von Bildern von eines Objektes oder einer Oberfläche, die besagte Vorrichtung (3) angepasst ist, an einem stabilisierten Aufhängungssystem (5) angebracht zu werden (5), an eines bewegliche Vehikel (1) angebracht zu werden, das sich bewegt mit einer Geschwindigkeit höher als 100km/Stunde in Anbetracht von des Objekt oder von der Oberfläche die in Bildern genommen werden sollen. Die besagte Vorrichtung enthält:
- ein Rahmen (30),
- mindestens zwei Kameramodule (4A, 4B, 4C, 4D) entsprechend irgendeinem der Ansprüche 1 bis 7 für das Aufnehmen einer ersten Reihe Ansichten durch das erste Kameramodul (4A) und der zweiten Reihe Ansichten durch das zweite Kameramodul (4B), jedes Kameramodul (4A, 4B) einen ersten Kamerateil enthaltend (50), der einen Pixel framing Sensor (51) enthält und einen zweiten Kamerateil (54) enthaltend, der mindestens ein Sichtselement enthält, vorgewählt in der Gruppe bestehend aus Objektive, Linse (55), optische Gläser und Kombinationen davon, so dass jedes Kameramodul (4A, 4B) eine zentrale optische Achse hat (OA1, OA2). Der besagte Pixel framing Sensor (51) wird versehen mit Mitteln (58) für die Übertragung von durch der Sensor (51) sammelten Daten zu einem Element, das von der Gruppe vorgewählt wurde, die aus Datengedächtnis, Datenbehandlungssystem und Kombinationen davon besteht, und
- ein Mittel (8) angepasst für das Orientieren der zentralen optischen Mittellinie (OA1, OA2) jedes Kameramoduls (4A, 4B) im Zusammenhang mit dem Rahmen (30), in dem die Mittel (8) für das Orientieren der zentralen optischen Mittellinie jedes Kameramoduls (4A, 4B) angepasst wird, für das Orientieren mindestens der zentralen optischen Mittellinie (OA1) eines ersten Kameramoduls (4A) in Bezug auf die zentrale optische Mittellinie (OA2) eines zweiten Kameramoduls (4B), vorzugsweise für das Orientieren mindestens der zentralen optischen Mittellinie (OA1) eines ersten Kameramoduls (4A) und der zentralen optischen Mittellinie (OA2)eines zweiten Kameramoduls (4B), damit das erste Kameramodul (4A) und das zweite Kameramodul (4B) einem überlappende Sichtsfeld (FW1, FW2) haben sollten, wo die besagte orientierende Mittel (8) in Bezug auf den Rahmen (30) abnehmbares angebracht ist, während mindestens der erste Teil (50) des Kameramodule(s) (4A, 4B) in Bezug auf besagte orientierende Mittel (8) abnehmbares angebracht ist.

10. Die Vorrichtung von Anspruch 9, in der die Mittel (8) für das Orientieren der zentralen optischen Achsen (OA1, OA2) der Kameramodule (4A, 4B) ein steifer Geräteträger (8) ist, mit mindestens zwei Durchgängen (80), jeder Durchgang, der zu mindestens einem Sitzelement (81)verbunden ist, das für die Sitzstellung mindestens eines Teiles eines Kameramoduls (4A, 4b) angepasst wurde, der steife Geräteträger (8), vorteilhaft mit einem Arm (82) angebracht, der ein Trägheitsmodul (84) trägt.

11. Die Vorrichtung von Anspruch 9 oder 10, in denen das Orientierungsmittel (8), ein Geräteträger ist, die mit mindestens zwei Durchgängen (80) ausgestattet wird, jeder Durchgang (80), der zu mindestens einem Sitzelement verbunden ist (81), das für die Sitzstellung mit einem Teil eines Kameramoduls (4A, 4b) angepasst wird. Ein erste Sitz (81) wird für die Richtung der zentralen optischen Mittellinie (OA1) eines ersten Kameramoduls (4A) in einer ersten Richtung angepasst, während ein zweiter Sitz (81) für die Richtung der zentralen optischen Mittellinie (OA2) eines zweiten Kameramoduls (4B) in einer zweiten Richtung angepasst wird. Die ersten und zweiten Richtungen (OA1, OA2) wurden für das Sicherstellen eines überlappenden Sichtsfeldes (FW1) des ersten Kameramoduls (4A) und eines Sichtsfeld(FW2) des zweiten Kameramoduls (4B) angepasst.

12. Die Vorrichtung von irgendeinem der Ansprüche 9 bis 11, in denen der zweite Teil (54) eines Kameramoduls (4A) am ersten Teil (50) des besagten Kameramoduls (4A) in einer abnehmbaren Weise angebracht wird und in welche mindestens die Befestigungsmittel (57) für das Beibehalten des zweiten Teils (54) in Position in Bezug auf den ersten Teil (50) des Kameramoduls (4) angepasst wird.

13. Die Vorrichtung von irgendeinem der Ansprüche 9 bis 11, in denen der zweite Teil (54) des Kameramoduls (4) zu der Mittel (8) für das Orientieren der zentralen optischen Achsen (OA1, OA2) der Kameramodule (4A, 4b) angebracht wird.

14. Die Vorrichtung von irgendeinem der Ansprüche 9 bis 13, in denen die Mittel (8) für das Orientieren der zentralen optischen Achsen (OA1, OA2) der Kameramodule (4A, 4B) an den Rahmen (30) mit Zwischenschaltung eine schwingungsdämpfende Mittel (100) verbunden wird.

15. Die Vorrichtung von irgendeinem der Ansprüche 9 bis 14, in denen die Orientieren (8) Mittel, eine Geräteträger ist, die mit mindestens vier Durchgängen (80) ausgestattet wird, jeder Durchgang (80) verbunden zu mindestens einem Sitzelement (81), das für das Empfangen eines Teils eines Kameramoduls (4A, 4b) angepasst wird, ein erster Sitz (81) angepasst für die Richtung der zentralen optischen Mittellinie (OA1) eines ersten Kameramoduls (4A) in einer ersten Richtung, ein zweiter Sitz (81) angepasst für die Richtung der zentralen optischen Mittellinie (OA2) eines zweiten Kameramoduls (4B) in einer zweiten Richtung, ein dritter Sitz (81) angepasst für die Richtung der zentralen optischen Mittellinie (OA3) eines dritten Kameramoduls (4C) in einer dritten Richtung und ein vierter Sitz (81) angepasst für die Richtung der zentralen optischen Mittellinie (OA4) eines vierten Kameramoduls (4D); die ersten und zweiten Richtungen (OA1, OA2) werden für das Sicherstellen eines überlappende Bereich (OZ) der Ansichten (FW1) des ersten Kameramoduls (4A) und eines Sichtsfeld(FW2) des zweiten Kameramoduls (4B) angepasst, während die dritten und vierten Richtungen werden für das Sicherstellen eines überlappende Sichtsfeld des dritten Kameramoduls und des Ansichtensfeldes des vierten Kameramoduls angepasst.

16. Die Vorrichtung von irgendeinem der Ansprüche 9 bis 15, in denen der Rahmen eine Aufnahmewanne ist (30), die mit mindestens zwei Durchgängen versehen wird, ein erster Durchgang, der für die Befestigung, mindestens teilweise in die Aufnahmewanne, der Mittel (8) für die zentrale optische Mittellinie (OA1, OA2) der Kameramodule (4A, 4B) angepasst wird (30), während der zweite Durchgang für das Sicherstellen des Sichtsfeldes (FW1, FW2) der Kameramodulen angepasst wird, und in welchen die Aufnahmewanne (30) mit Mitteln (35) für das Stützen der Mittel (8) für die Richtung der zentralen optischen Achsen (OA1, OA2) der Kameramodule mit einem schwingungsdämpfende Mittel (100) ausgestattet wird, die Aufnahmewanne (30), die vorteilhaft mit Mitteln für das Anschließen der Aufnahmewanne auf einer stabilisierten Aufhebung (5) ausgestattet wird; die Aufnahmewanne (30) ist vorzugsweise mit einer Abdeckung (9) und ein unteres Element (33) mit transparenten Blättern (33A) für das Definieren eines im wesentlichen geschlossenen Raumes für die Kameramodule (4A, 4B)versehen, während die Vorrichtung nebenbei ein Heizelement (41)-für das Sicherstellen einer im wesentlichen konstanten Temperatur in der Aufnahmewanne (30) enthält.

17. Die Vorrichtung von Anspruch 9, in der die Mittel für das Orientieren der zentralen optischen Mittellinie (OA1, oa2) von mindestens zwei Kameramodulen (4A, 4b) mindestens zwei eindeutige Elemente (8) enthält, erstes (8) verwendbar für das Orientieren der zentralen Mittellinie (OA1) eines ersten Kameramoduls (4A), während zweites (8) verwendbar für das Orientieren der zentralen Mittellinie (OA2) eines zweiten Kameramoduls (4B) unhabhängig von der ersten (4A).

18. Ein Flugkörper versieht mit mindestens einer Kamera entsprechend Anspruch 8.

19. Ein Flugkörper versieht mit Kameras (4A, 4B) für das Nehmen von Bildern eines Gegenstandes oder einer Oberfläche, der besagte Flugkörper (1), der eine stabilisierte Aufhebung (5) enthält, an der eine Vorrichtung (3) entsprechend irgendeinem der Ansprüche 9 bis 17 mit verschiedenen Kameramodulen (4A, 4b) angebracht wird.

20. Ein Prozess für das Nehmen von Bildern eines Gegenstandes oder der Oberfläche während eines Fluges eines Flugkörpers (1) in einer Richtung; der besagte Flugkörper wird mit Kameras (4A, 4B)ausgestattet; der besagte Flugkörper (1) enthält eine stabilisierte Aufhebung (5), an der eine Vorrichtung (3) mit mindestens einem Kameramodul (4A) angebracht wird; mindestens ein Kameramodul (4A) enthält einen ersten Teil (50) mit einem Pixel framing Sensor (51) und einen zweiten Teil (54) mit mindestens einem Betrachtungselement vorgewählt in der Gruppe bestehend aus Objektiven, Linse (55), optischen Gläsern und Kombinationen davon. Das Kameramodul (4A) hat eine zentrale optische Mittellinie (OA1). Der Pixel framing Sensor (51) wird mit Mitteln (58) für die Datenübermittlung versehen; diese Daten wurden durch den Sensor zu einem Element (60), das von der Gruppe die aus Datengedächtnis, Datenbehandlungssystem und Kombinationen davon vorgewählt wurde, versammelt. Das Kameramodul (4A) wird für das Nehmen einer Ansicht in eine Belichtung Zeit von weniger als 0.1 Sekunde angepasst. Der Pixels framing Sensor (51) des Kameramoduls wird bewegliches in Bezug auf den zweiten Teil (54) angebracht. Das besagte Kameramodul ist ein Kameramodul entsprechend irgendeinem der Ansprüche 1 bis 7, und der nachfolgende Schritt enthielt:
den Pixel framing Sensor durch ein piezo Positionierstelltisch (53) bewegen, vorteilhaft auf weniger als 100 µm, mit einer im wesentlichen konstanten kontrollierten Geschwindigkeit während eines Zeitabschnitts grösser als die Belichtung Zeit, um einen Augleich der Bewegung Systems (forward motion compensation) der genommenen Bilder während des Fluges sicherzustellen.

## Revendications

1. Un module caméra (4) pour la prise d'images à partir d'un engin volant (1) se déplaçant dans une direction de vol (X), ledit module caméra (4) comprenant une première partie (50) avec au moins un capteur matriciel (51) et une seconde partie (54) comprenant au moins un élément de vision sélectionné dans le groupe constitué d'objectifs, lentilles (55), verres optiques et combinaisons de ceux-ci, dans lequel le module caméra (4) a un axe optique central (OA1,OA2), ledit capteur matriciel (51) étant muni d'un moyen (58) pour transférer des données récoltées par le capteur matriciel (51) vers un élément sélectionné dans le groupe constitué de mémoire de données, d'un système de traitement de données et d'une combinaison de ces derniers, et au moins un élément pour assurer une compensation de filés ou mouvement en avant, dans lequel le module caméra (4) est adapté pour la prise de vue dans un temps exposition de moins de 0,1 seconde, le capteur matriciel (51) du module caméra (4) est monté de manière mobile par rapport à la seconde partie (54), le capteur matriciel (51) est libre d'éléments, de couches ou films induisant une diffraction ou une perturbation, et le capteur matriciel (51) est associé à un élément piézoélectrique de positionnement (53) assurant au moins un mouvement du capteur matriciel (51) à une vitesse sensiblement constante pour un temps plus long que le temps d'exposition, ledit élément piézoélectrique de positionnement (53) étant adapté pour agir comme moyen de compensation du mouvement en avant de l'engin volant pour le capteur matriciel (51) du module caméra.

2. Le module caméra de la revendication 1, **caractérisé en ce que** l'élément piézoélectrique de positionnement (53) assure un mouvement du capteur matriciel (51) de moins de 100µm a une vitesse sensiblement constante pour un temps plus long que le temps d'exposition, ledit élément piézoélectrique de positionnement (53) étant adapté pour agir comme moyen de compensation du mouvement en avant de l'engin volant pour le capteur matriciel (51) du module caméra.

3. Le module caméra de la revendication 1 ou 2, dans lequel le capteur matriciel (51) est associé à un élément piézoélectrique de positionnement (53) assurant au moins un mouvement du capteur à une vitesse sensiblement constante pour un temps plus long que deux fois le temps d'exposition, avantageusement compris entre 5 et 100 fois le temps d'exposition, ledit élément piézoélectrique de positionnement (53) étant adapté pour agir comme moyen de compensation du mouvement en avant de l'engin volant pour le capteur matriciel (51) du module caméra.

4. Le module caméra selon l'une des revendications 1 à 3, dans lequel l'élément piézoélectrique de positionnement agissant comme moyen de compensation du mouvement en avant de l'engin volant pour le capteur matriciel (51) du module caméra comprend une plaque (52) guidée par des rails de guidage (59).

5. Le module caméra selon l'une des revendications 1 à 4, qui est sélectionné dans le groupe constitué de modules caméra IR, modules caméra multispectrale, modules caméra monochrome, modules caméras panchromatique, et des combinaisons de ces derniers.

6. Le module caméra selon l'une des revendications 1 à 5, qui comprend une pièce de support (70) supportant le capteur matriciel (51), ainsi que les moyens de contrôle électronique (58) pour ledit capteur matriciel (51), ladite pièce de support (70) ayant une première arête (70A) et une seconde arête (70B) opposée à la première arête (70A), dans lequel le module (4) comprend deux capteurs piézoélectriques (53A,53B) ayant chacun une partie mobile, la partie mobile du premier élément piézoélectrique de positionnement (53A) étant attachée à la première arête de la pièce de support (70), alors que la partie mobile du second élément piézoélectrique de positionnement (53B) est attachée à la seconde arête de la pièce de support (70).

7. Le module caméra selon l'une des revendications 1 à 6, dans lequel l'élément piézoélectrique de positionnement (53) comprend une plaque mobile (52), dans lequel le capteur matriciel (51) est associé à une partie électronique (58) qui est attachée à la plaque (52) et dans lequel la plaque mobile (52A) a une ouverture pour le capteur matriciel (51) pour permettre au capteur matriciel (51) de prendre des prises de vue.

8. Une caméra comprenant au moins un module caméra conformément à n'importe laquelle des revendications 1 à 7.

9. Dispositif (3) pour caméras (4) pour la prise d'images d'un objet ou d'une surface, ledit dispositif (3) étant adapté pour être monté sur un système de suspension stabilisé (5) pour être monté sur un véhicule mobile (1) bougeant à une vitesse relative supérieure à 100km/heure par rapport à l'objet ou la surface à prendre en images, ledit dispositif comprenant :
- un cadre (30),
- au moins deux modules caméra (4A,4B,4C,4D) selon l'une quelconque des revendications 1 à 7 pour prendre une première série de prises de vue par le premier module caméra (4A) et une seconde série de prises de vue par le deuxième module caméra (4B), chaque module caméra (4A,4B) comprenant une première partie (50) comprenant un capteur matriciel (51) et une seconde partie (54) comprenant au moins un élément de visualisation sélectionné dans le groupe constitué d'objectifs, de lentilles (55), de verres optiques et de combinaisons de ceux-ci, dans lequel chaque module caméra (4A,4B) a un axe optique central (OA1,OA2), ledit capteur matriciel (51) étant pourvu d'un moyen (58) pour transférer des données récoltées par le capteur matriciel (51) vers un élément sélectionné dans le groupe constitué de mémoire de données, systèmes de traitement de données, ainsi que des combinaisons de ceux-ci, et
- un moyen (8) adapté pour orienter l'axe optique central (OA1,OA2) de chaque module caméra (4A,4B) par rapport au cadre (30),
dans lequel le moyen (8) pour orienter l'axe optique central de chaque module caméra (4A,4B) est adapté pour orienter au moins l'axe optique central (OA1) d'un premier module caméra (4A) par rapport à l'axe optique central (OA2) d'un deuxième module caméra (4B), de préférence pour orienter au moins l'axe optique central (OA1) d'un premier module caméra (4A) et l'axe optique central (OA2) d'un deuxième module caméra (4B), pour que le premier module caméra (4A) et le deuxième module caméra (4B) aient un recouvrement des champs angulaires (FW1,FW2), dans lequel ledit moyen d'orientation (8) est monté de manière démontable par rapport au cadre (30), alors qu'au moins la première partie (50) du(des) module(s) caméra (4A,4B) est monté de manière démontable par rapport audit moyen d'orientation (8).

10. Le dispositif de la revendication 9, dans lequel le moyen d'orientation de l'axe optique central (OA1,OA2) des modules caméra (4A,4B) est un support rigide (8) prévu avec au moins deux passages (80), chaque passage étant associé à au moins un élément siège (81) adapté pour supporter au moins une partie du module caméra (4A,4B), le support rigide (8) étant avantageusement muni d'un bras (82) portant un module inertiel (84).

11. Le dispositif des revendications 9 ou 10, dans lequel le moyen d'orientation (8) est un support prévu avec au moins deux passages (80), chaque passage (80) étant associé à au moins un élément siège (81) adapté pour supporter une partie du module caméra (4A,4B), dans lequel une premier siège (81) est adapté pour diriger l'axe optique central (OA1) d'un premier module caméra (4A) dans une première direction, tandis qu'un deuxième siège (81) est adapté pour diriger l'axe optique central (OA2) d'un second module caméra (4B) dans une seconde direction, où les première et deuxième directions (OA1,OA2) sont adaptées afin d'assurer un recouvrement (OZ) du champ angulaire (FW1) du premier module caméra (4A) avec le champ angulaire (FW2) du second module caméra (4B).

12. Le dispositif selon l'une des revendications 9 à 11, dans lequel la seconde partie (54) d'un module caméra (4A) est montée sur la première partie (50) dudit module caméra (4A) de manière démontable et dans lequel au moins un moyen d'attache (57) est adapté pour maintenir la seconde partie (54) en position par rapport à la première partie (50) du module caméra (4).

13. Le dispositif selon l'une des revendications 9 à 11, dans lequel la seconde partie (54) du module caméra (4) est attachée au moyen d'orientation (8) de l'axe optique central (OA1, OA2) du module caméra (4A, 4B).

14. Le dispositif selon l'une des revendications 9 à 13, dans lequel le moyen d'orientation (8) de l'axe optique central (OA1, OA2) du module caméra (4A, 4B) est connecté au cadre (30) par l'interposition d'un moyen d'absorption de vibrations (100).

15. Le dispositif selon l'une des revendications 9 à 14, dans lequel le moyen d'orientation (8) est un support prévu avec au moins quatre passages (80), chaque passage (80) étant associé à au moins un élément siège (81) adapté pour accueillir une partie du module caméra (4A,4B), dans lequel un premier siège (81) est adapté pour diriger l'axe optique central (OA1) d'un premier module caméra (4A) dans une première direction, un deuxième siège (81) est adapté pour diriger l'axe optique central (OA2) d'un deuxième module caméra (4B) dans une deuxième direction, un troisième siège (81) est adapté pour diriger l'axe optique central (OA3) d'un troisième module caméra (4C) dans une troisième direction et un quatrième siège (81) est adapté pour diriger l'axe optique central (OA4) d'un quatrième module caméra (4D), où les première et deuxième directions (OA1,OA2) sont adaptées pour assurer un recouvrement (OZ) du champ angulaire (FW1) du premier module caméra (4A) et du champ angulaire (FW2) du second module caméra (4B), tandis que les troisième et quatrième directions sont adaptées pour assurer un recouvrement du champ angulaire du troisième module caméra et du champ angulaire du quatrième module caméra.

16. Le dispositif selon l'une des revendications 9 à 15, dans lequel le cadre est un réceptacle (30) prévu avec au moins deux passages, un premier passage étant adapté pour placer les moyens (8) pour diriger les axes optique centraux (OA1,OA2) des modules caméra (4A,4B) au moins partiellement dans le réceptacle (30), tandis que le deuxième passage est adapté pour assurer les champs angulaires (FW1,FW2) des modules caméras, et dans lequel le réceptacle (30) est prévu avec le moyen (35) pour soutenir le moyen (8) pour diriger les axes optique centraux (OA1,OA2) des modules caméra (4A,4B) avec l'interposition d'un moyen d'absorption de vibrations (100), le réceptacle (30) étant avantageusement prévu avec un moyen pour associer le réceptacle sur une suspension stabilisée (5), préférablement le réceptacle (30) étant prévu avec un couvercle (9) et un élément de fond (33) avec des feuilles transparentes (33A) pour définir une chambre sensiblement fermée pour les modules caméra (4A,4B), tandis que le dispositif comprend en outre un élément de chauffage (41) pour assurer une température sensiblement constante dans le réceptacle (30).

17. Le dispositif de la revendication 9, dans lequel le moyen pour orienter les axes optique centraux (OA1, OA2) d'au moins deux modules caméra (4A, 4B) comprend au moins deux éléments distincts (8), un premier (8) étant conçu pour orienter l'axe central (OA1) d'un premier module caméra (4A), tandis qu'un second (8) est conçu pour orienter l'axe central (OA2) d'un deuxième module caméra (4B) distinct du premier (4A).

18. Un engin volant muni d'au moins une caméra selon la revendication 8.

19. Un engin volant muni de caméras (4A, 4B) pour prendre des prises de vue d'un objet ou d'une surface, ledit engin volant (1) comprenant une suspension stabilisée (5) sur lequel un dispositif (3) selon l'une quelconque des revendications 9 à 17 avec des modules caméra distincts (4A, 4B) est monté.

20. Un procédé de prise de vues d'un objet ou d'une surface pendant un vol d'un engin volant (1) dans une direction, ledit engin volant étant muni de caméras (4A,4B), d'où ledit engin volant (1) comprend une suspension stabilisée (5) sur lequel un dispositif (3) avec au moins un module caméra (4A) est monté, dans lequel au moins un module caméra (4A) comprend une première partie (50) avec un capteur matriciel (51) et une seconde partie (54) avec au moins un élément de vision sélectionné dans le groupe constitué d'objectifs, de lentilles (55), de verres optiques et de combinaisons de ceux-ci, dans lequel le module caméra (4A) a un axe optique central (OA1), ledit capteur matriciel (51) étant muni d'un moyen (58) pour transférer des données recueillies par le senseur à un élément (60) sélectionné dans le groupe constitué de mémoire de données, système de traitement de données, et de combinaisons de ceux-ci, dans lequel le module caméra (4A) est adapté pour la prise de vue avec un temps d'exposition de moins de 0,1 seconde, dans lequel le capteur matriciel (51) du module caméra est monté par rapport à la seconde partie (54), ledit module caméra étant un module caméra selon l'une quelconque des revendications 1 à 7, comprenant l'étape de :
déplacer le capteur matriciel par un élément piézoélectrique de positionnement (53), avantageusement sur moins de 100µm, à une vitesse contrôlée sensiblement constante pour un temps plus long que le temps d'exposition afin d'assurer une compensation du mouvement en avant de l'image prise pendant le vol.
